# EUROPEAN PATENT SPECIFICATION

(11) **EP 2 336 013 B1**
(45) Date of publication and mention of the grant of the patent: **19.12.2012**
(21) Application number: 09815882.7
(22) Date of filing: 24.09.2009
(51) Int. Cl.: B62J 23/00, B62J 17/02

(54) **FASTENING STRUCTURE FOR VEHICLE FRONT COVER**
BEFESTIGUNGSSTRUKTUR FÜR EINE FAHRZEUGVORDERABDECKUNG
STRUCTURE DE FIXATION POUR RECOUVREMENT AVANT DE VÉHICULE

(30) Priority: 26.09.2008 JP 2008247121
(43) Date of publication of application: 22.06.2011
(73) Proprietor: Honda Motor Co., Ltd., Minato-ku Tokyo 107-8556 (JP)
(72) Inventor: NUMATA, Hidehiko, Wako-shi Saitama 351-0193 (JP); KITO, Genichi, Wako-shi Saitama 351-0193 (JP); TATEISHI, Seiichi, Wako-shi Saitama 351-0193 (JP)
(74) Representative: Trossin, Hans-Jürgen
(86) International application number: PCT/JP2009/004801
(87) International publication number: WO 2010/035460

(56) References cited:
- EP-A2- 1 398 256
- EP-A2- 1 495 953
- FR-A- 1 077 035
- JP-A- 6 048 344
- JP-A- 6 048 344
- JP-A- 2002 284 066
- JP-A- 2002 284 066
- US-A- 4 178 033

## Description

### TECHNICAL FIELD

The present invention relates to a fastening structure of a front cover of a vehicle.

### BACKGROUND ART

There has been a front cover making up a leg shield of a scooter, the front cover being structured so that the front cover is divided between a center cover in the left right center side, and a side cover in both the left and right sides of the center cover (for example, refer to JP 11-198881A.

EP 1398256 A2 discloses a front cover in accordance with the preamble of claim 1.

### [TECHNICAL PROBLEM]

However, concerning the above structure, the center cover and the side cover are sometimes connected to each other by placing a screw from outside the cover. In such a case, the connecting operation can be conducted easily. However, the visual appearance may decline because the screw is exposed in the exterior of the cover.

Thus, an object of the present invention is to provide a structure of a fastening part between a first and second cover making up a front cover of a vehicle, such that the fastening operation can be easily conducted and the visual appearance of the front cover is maintained.

### [SOLUTION TO PROBLEM]

The invention provides a front cover in accordance with claim 1.
(1) A fastening structure of the front cover of a vehicle including a first cover part, and a second cover part adjacent to the first cover part and partially overlapping with the first cover part, includes: a fastening part being an overlapping portion between the first cover part and the second cover part; a fixing member being attached from a front side of the fastening part, the fixing member fixing the first cover part and the second cover part; and a shielding member covering the fastening part as well as the fixing member from the front side, at least a portion of the shielding member being removably attached and covering the fixing member.

(2) The fastening structure of the front cover of the vehicle can be configured as follows: the shielding member is elastic.

(3) The fastening structure of the front cover of the vehicle is configured as follows: the shielding member is attached to a back side of either the first cover part or the second cover part whichever is placed relatively to a front.

(4) The fastening structure of the front cover of the vehicle can be configured as follows: the fixing member includes a fastening arm extending across the first cover part and the second cover part, the fastening arm being attached to at least one of the first cover part and the second cover part; and an insertion hole is provided on the shielding member, the fastening arm being inserted through the insertion hole.

(5) The fastening structure of the front cover of the vehicle can be configured as follows: a portion of the fastening arm, the portion being inserted through the insertion hole, is parallel to a direction in which the shielding member is attached or detached.

### [ADVANTAGEOUS EFFECTS OF INVENTION]

According to the invention described in (1) above, when the fastening member (fixing member) is being fastened or unfastened, the condition of the shielding part changes from the shielding condition to the retreating condition. As a result, the fastening and unfastening operations of the fastening part can be conducted easily. At the same time, both covers can be fastened easily. Meanwhile, according to the invention described in (1) above, after both covers are fastened and fixed by the fastening member (fixing member), it is possible to restore the shielding part to a shielding condition and cover the fastening part from outside the cover. Thus, it is possible to prevent the fastening member (fixing member) from being exposed to the exterior of the cover. At the same time, the visual appearance of the front cover can be maintained.

According to the invention described in (2) above, the fastening member (fixing member) can be fastened and unfastened by merely elastically deforming the shielding part (elastic member) from the shielding condition to the retreating condition. As a result, the fastening and unfastening operations can be conducted easily. At the same time, after both covers have been fastened and fixed to each other, the fastening part can be shielded from the exterior of the cover by merely restoring the elastic deformation of the shielding part. Thus, the visual appearance of the front cover can be maintained. In addition, the front cover can be easily attached to the vehicle body. Furthermore, the front cover can be easily attached and removed during maintenance operations and the like after the vehicle is completed.

According to the invention described in (3) above, the shielding part is attached to the interior portion of the second cover located outside the cover, both covers overlapping at the interior portion (fastening part). As a result, the section where the shielding part is attached to the front cover is not exposed to the exterior of the cover. Further, the fastening part, at which both covers overlap, can be easily shielded by this shielding part from outside the cover without making it difficult for the shielding part to be attached to the front cover.

According to the invention described in (4) above, the shielding part can be held by using the fastening arm. At the same time, this fastening arm can be made smaller compared to the case in which the fastening arm is placed so as to detour the shielding part. In this way, the overall structure of the fastening part can be simplified.

According to the invention described in (5) above, the shielding part can be provided with a space for movement in the direction in which the fastening member (fixing member) is fastened. In addition, it is possible to increase the space for the elastic deformation of the shielding part. As a result, the fastening operation can be conducted more easily.

### BRIEF DESCRIPTION OF DRAWINGS

### [FIG. 1]

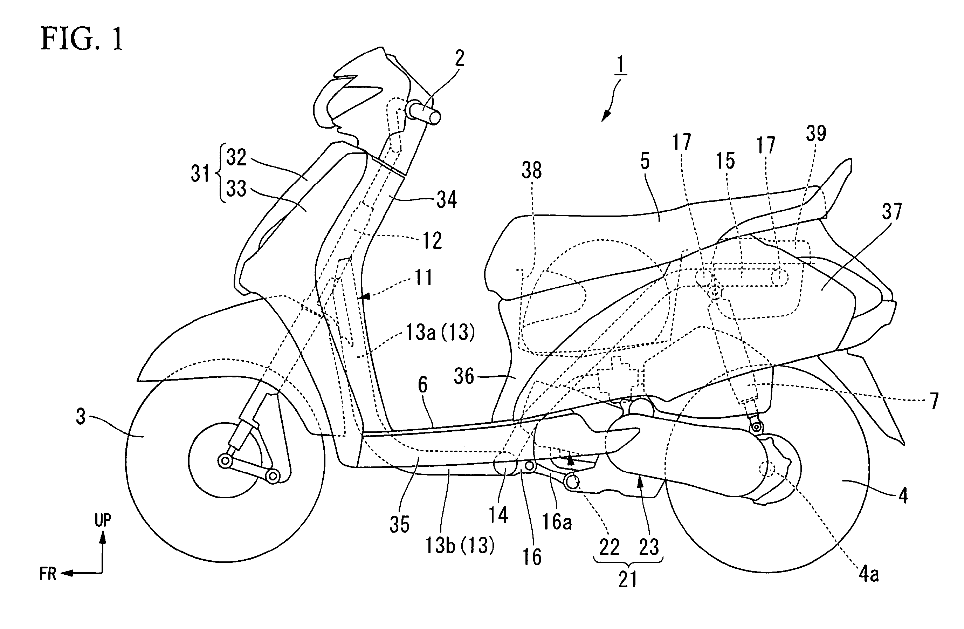

FIG. 1 is a left side view of a two-wheeled motor vehicle according to an embodiment of the present invention.

### [FIG. 2]

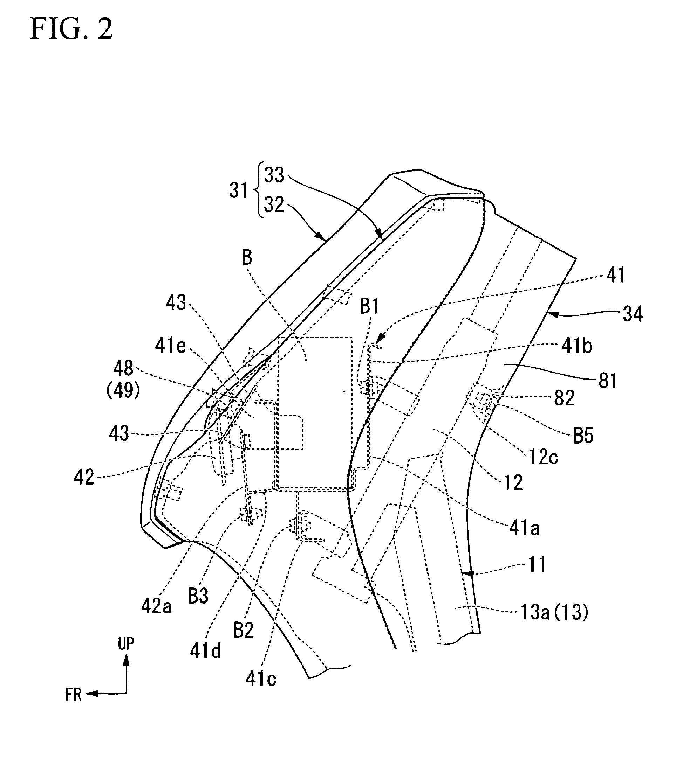

FIG. 2 is a left side view of an upper portion of a front cover of the two-wheeled motor vehicle according to the above embodiment.

### [FIG. 3]

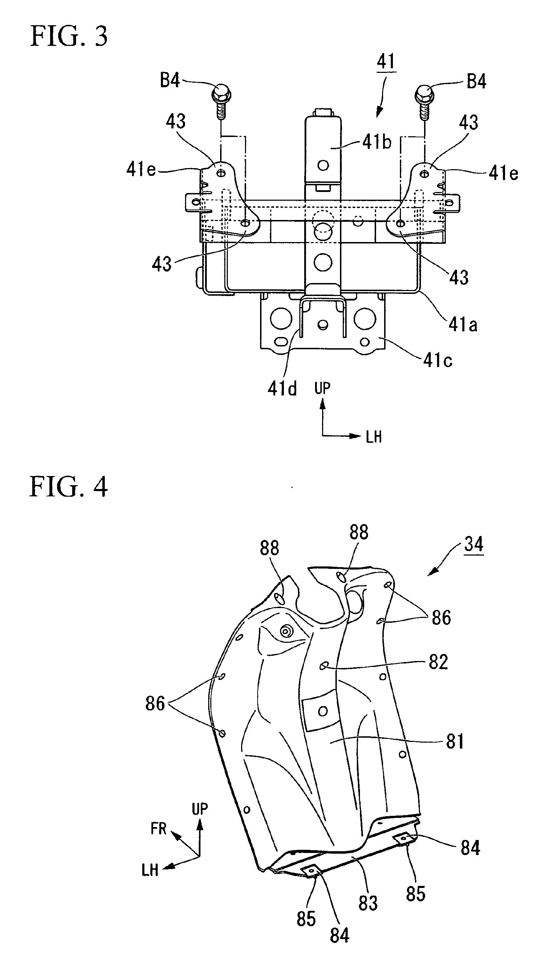

FIG. 3 is a frontal view of a battery tray placed inside the front cover according to the above embodiment.

### [FIG. 4]

FIG. 4 is a diagrammatic perspective view of an inner cover attached to the front cover from a back side according to the above embodiment.

### [FIG. 5]

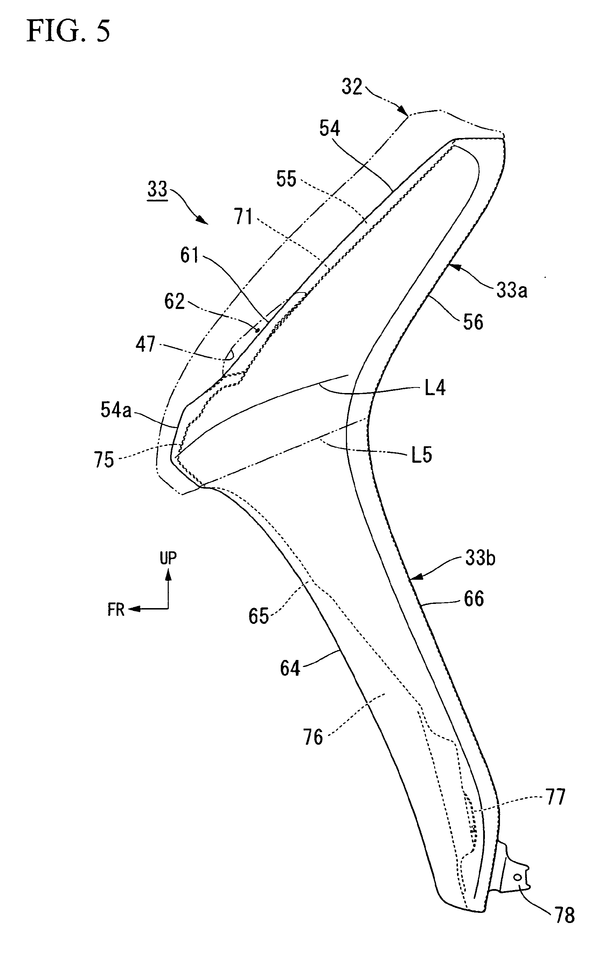

FIG. 5 is a left side view of a left front side cover of the front cover according to the above embodiment.

### [FIG. 6]

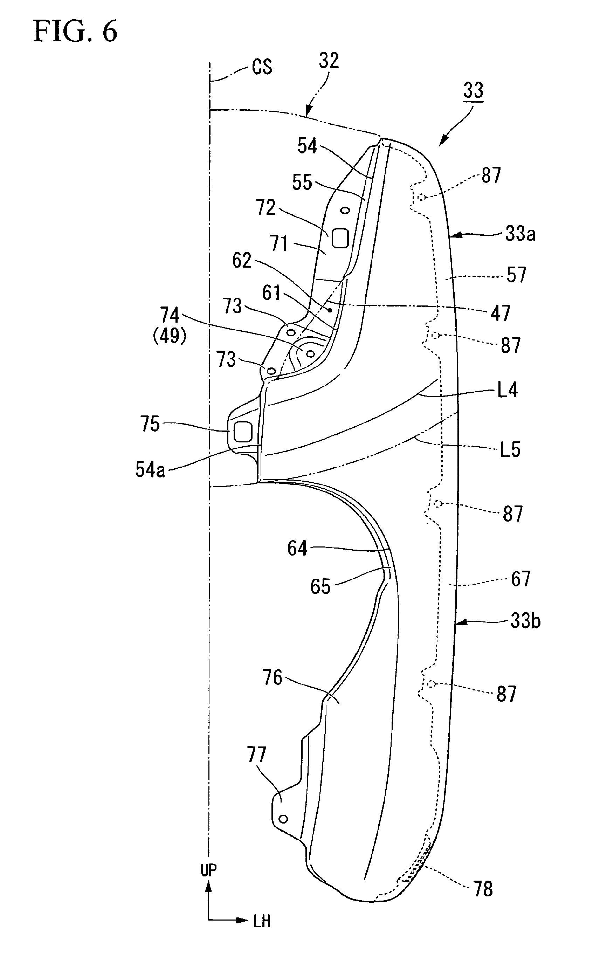

FIG. 6 is a frontal view of the left front side cover according to the above embodiment.

### [FIG. 7]

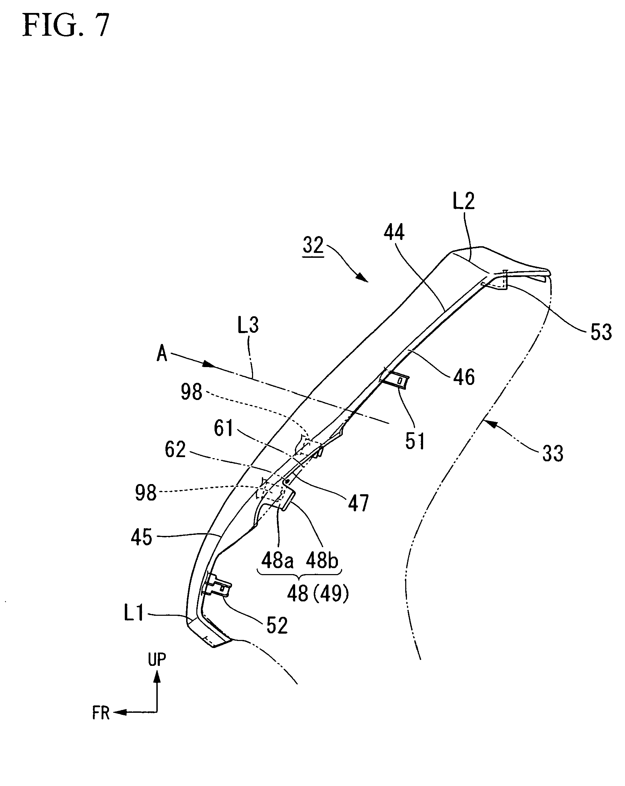

FIG. 7 is a left side view of a front center cover of the front cover according to the above embodiment.

### [FIG. 8]

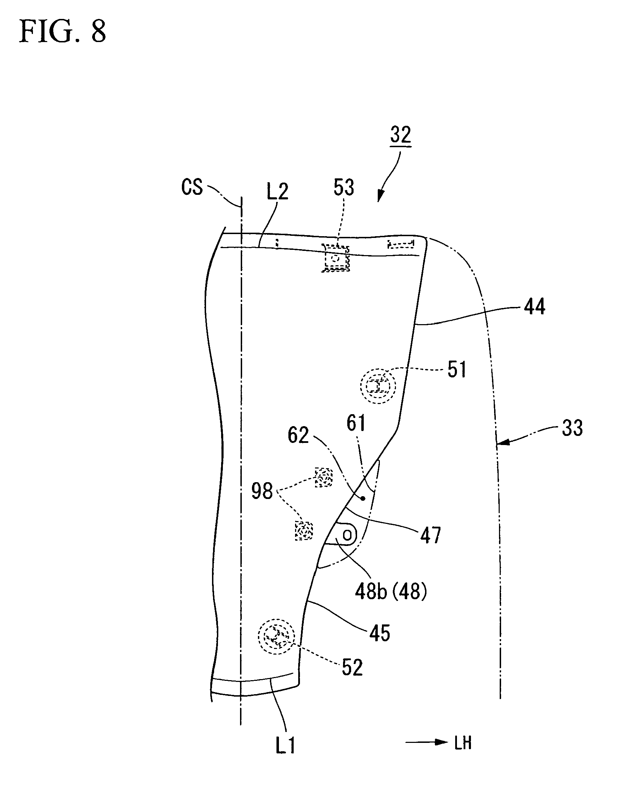

FIG. 8 is an A-arrow-view of FIG. 7.

### [FIG. 9]

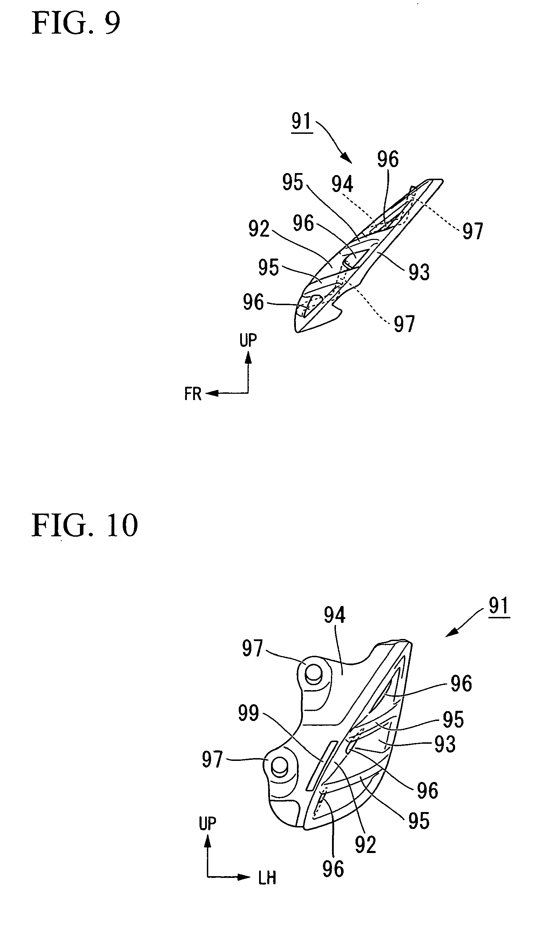

FIG. 9 is a left side view of a left rubber cover shielding a fastening part of the front center cover and the left front side cover according to the above embodiment.

### [FIG. 10]

FIG. 10 is a frontal view of the left rubber cover according to the above embodiment.

### [FIG. 11]

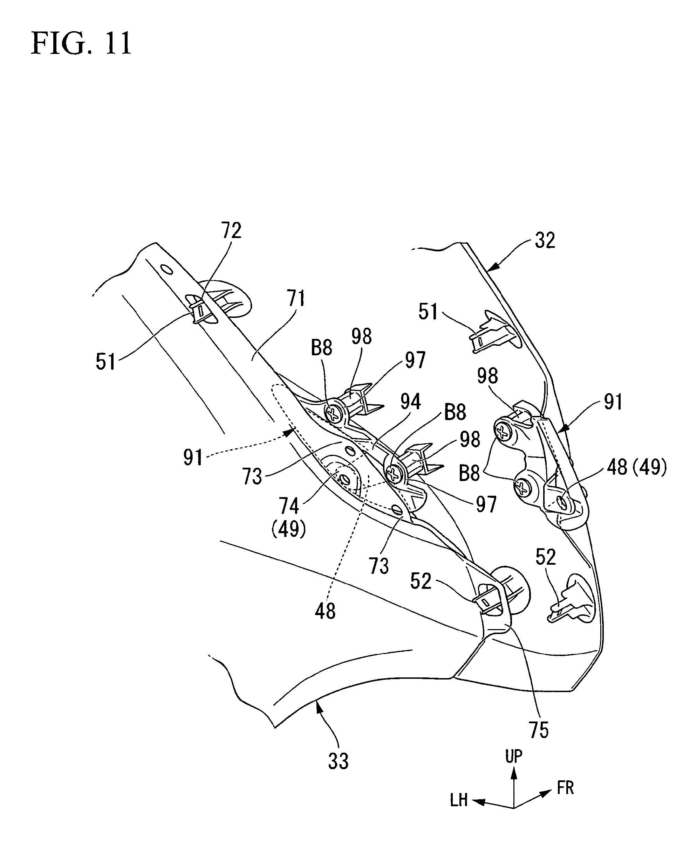

FIG. 11 is a diagrammatic perspective view of an inner side of the front cover according to the above embodiment.

### [FIG. 12A]

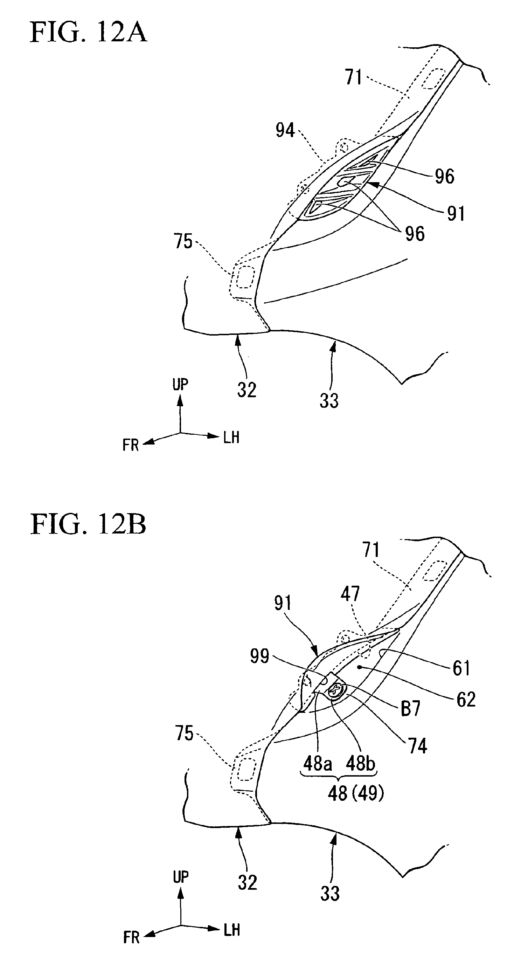

FIG. 12A is a diagrammatic perspective view of a peripheral of the left rubber cover of the front cover according to the above embodiment, FIG. 12A representing a shielding condition in which the fastening part is shielded.

### [FIG. 12B]

FIG. 12B is a diagrammatic perspective view of the peripheral of the left rubber cover of the front cover according to the above embodiment, FIG. 12B representing a retreating condition in which the fastening part is exposed.

### DESCRIPTION OF EMBODIMENTS

Hereunder, an embodiment of the present invention is described with reference to the drawings. In the following description, orientations such as front/rear/left/right are the same as the front/rear/left/right orientations in a vehicle unless particularly mentioned. In the drawings, the arrow FR points to the front side of a vehicle. Meanwhile, the arrow LH points to the left side of the vehicle. Further, the arrow UP points to the upside of the vehicle.

The two-wheeled motor vehicle (saddle riding type vehicle) 1 includes a front wheel 3 steered by a bar handle 2, and a rear wheel 4 driven by a swing unit 21. Steering type components including the bar handle 2 and the front wheel 3 are steerably pivot-supported by a head pipe 12 at a front end of a vehicle body frame 11. In a lower rear section of the vehicle body frame 11, a frontal lower section of the swing unit 21 is pivot-supported so as to be able to swing in a vertical direction. A section between the bar handle 2 and a seat 5 supported above a rear portion of the vehicle body for a passenger to sit is referred to as a bottom section. A floor step 6 is placed on this bottom section for the passenger to place his or her feet.

The vehicle body frame 11 is formed by integrally joining multiple types of steel by welding and the like. The vehicle body frame 11 includes the head pipe 12 located at its front end; a single main frame 13 extending in a diagonal lower rear direction from this head pipe 12, and then bending rearwards at a frontal lower portion of the vehicle body and extending further; a cross frame 14 extending in a left-right direction at a frontal and rear middle section of a lower portion of the vehicle body, the cross frame 14 joining a rear end section of the main frame 13 to its middle section in a left and right side; left-right rear frames 15 extending from the left and right ends of this cross frame 14 in a diagonal upper rear direction, and then bending rearwards at an upper side of a rear section of the vehicle body and extending further; a left-right pivot plate 16 joined to a rear side of a left and right ends of the cross frame 14; and a pair of front and rear cross members 17 placed across the left-right rear frames 15. Hereunder, a portion of the main frame 13 extending in a diagonal lower rear direction is referred to as a down frame part 13a. On the other hand, a portion extending roughly horizontally in a rear direction is referred to as a lower frame part 13b.

The swing unit 21 is a swing-type power unit integrating an engine 22 located in a frontal part of the swing unit 21, and a power transmission mechanism 23 located in a rear left side of the swing unit 21. A front portion of the swing unit 21 is supported by the left-right pivot plate 16 via a suspension link 16a so as to be able to swing in a vertical direction. At the same time, the rear left side of the swing unit 21 is supported by the left rear frame 15 via a rear cushion 7 so that the rear left side of the swing unit 21 can approach and move away from the left rear frame 15. In this way, a unit swing type rear suspension is formed in a rear section of the vehicle.

An engine (internal combustion engine) 22 is a single cylinder engine with a crank shaft (not diagramed) placed along the left-right direction (vehicle width direction). A cylinder protrudes toward the front in an approximately horizontal manner (more specifically, in a slight frontal-upper direction) from a front end portion of a crank case of the engine 22. In a left side of the crank case, a front portion of a power transmission case of the power transmission mechanism 23 extending rearwards is integrally placed. A rear wheel axle 4a protruding toward a right side (center side of the vehicle body) of the power transmission mechanism 23 is rotatably supported in a rear end portion of the power transmission mechanism 23. Further, a rotational power of the crank shaft is transmitted to the rear wheel axle 4a via the power transmission mechanism 23. As a result, the rear wheel 4 supported by the rear wheel axle 4a is driven, and the two-wheeled motor vehicle 1 runs.

The two-wheeled motor vehicle 1 includes a front cover covering a front portion of the vehicle body frame 11 from a front direction and a diagonal frontal left-right outer side; an inner cover 34 covering the front portion of the vehicle body frame 11 from a rear side; a front side cover 35 covering a lower portion of the vehicle body frame 11 from the left and right; the floor step 6 covering the lower portion of the vehicle body frame 11 from an upper side; a rear center cover 36 covering a front side of a rear portion of the vehicle body frame 11 from a front side; and left and right rear side covers 37 covering the rear portion of the vehicle body frame 11 from the side.

The front cover 31 and the inner cover 34 form a leg shield covering a foot of a driver on the vehicle from the front side. In addition, the front cover 31 includes a front center cover 32 covering an upper side of the front portion of the vehicle body frame 11; and a front side cover 33 connecting with a side of the front center cover 32 and covering the front portion of the vehicle body frame 11 from a diagonal frontal outer side.

The seat 5 is supported on an upper side of the rear center cover and the left and right rear side covers 37. A storage box 38 is placed in a portion surrounded by the rear center cover 36 and a front portion of the left and right rear side covers 37. Items such as helmets can be stored in the storage box 38. A fuel tank 39 is placed in a rear direction of the storage box 38 and in between the rear section of the left and right rear side covers 37.

Next, an explanation is provided with reference to FIGS. 2 and 3. FIG. 2 shows a space in a frontal direction of the head pipe 12 and surrounded by the front cover 31 and the inner cover 34. A rectangular parallelepiped battery B is placed within this space. This battery B is stored inside a boxed battery tray 41. The battery tray 41 is formed by integrally joining multiple types of steel. This battery tray 41 includes a box portion 41 a storing the battery B; an upper support stay 41 b extending upward from a rear side of this box portion 41 a; a lower support bracket 41 c protruding downward in a lower side of the box portion 41a; a horn support bracket 41d protruding frontwards from the lower support bracket 41c in a lower section of the box portion 41a; and a pair of left and right cover support brackets 41 e extending frontward from both the left and right sides of the box portion 41 a.

The upper support stay 41 b is fastened and fixed by a single bolt B1 to the upper support bracket 12a placed and protruding in a front side of a middle portion of the head pipe 12. The lower support bracket 41c is fastened and fixed by a pair of left and right bolts B2 to the lower support bracket 12b placed and protruding in a front side of a lower portion of the head pipe 12. As a result, the entire battery tray 41 is supported at the front side of the head pipe 12. A horn 42 is placed immediately in front of the box portion 41a. The horn support stay 42a extends downward from a rear side of the horn 42. A lower end portion of this horn support stay 42a is fastened and fixed by a bolt B3 to the horn support bracket 41 d.

The left-right cover support bracket 41e includes a pair of upper and lower cover fastening parts 43. This cover fastening part 43 is in a planar form. An upper portion of each of these fastening parts 43 is slanted so as to be placed in a rear direction of the left and right sides of a part immediately in front of the box portion 41a. Each frame fastening portion 73, described later, formed in an upper left-right inner side of the left and right front side covers 33, is respectively fastened and fixed by a bolt B4 to each of the cover fastening parts 43.

Next, an explanation is provided with reference to FIGS. 2, 7, and 8. The front center cover 32 is an integrated resin molded article. The front center cover 32 is formed so as to cover the surrounding area of the head pipe 12 from a frontal side at a place distanced in the forward direction from this head pipe 12. In addition, the front center cover 32 is placed in a slanted manner so as to be approximately parallel to the head pipe 12 from a side view, and so that an upper portion of the front center cover 32 is placed rearwards. A lower portion of the front center cover 32 is curved forming a convexed circular arc in a diagonal upper frontal direction from a side view. At the same time, the lower portion of the front center cover 32 forms a front end ridgeline L1 slanted toward the upper rear side from a side view. In addition, the lower portion of the front center cover 32 extends in a diagonal lower rear direction by a predetermined amount. An upper fringe portion of the front center cover 32 forms an upper end ridgeline L2 extending in a lower rear direction from a side view. Further, the upper fringe portion of the front center cover 32 extends toward the rear side in an approximately horizontal manner by a predetermined amount.

Here, a line L3 shown in FIG. 7 is a straight line along the releasing direction of the front center cover 32. With respect to the direction orthogonal to the upper portion of the front center cover 32 slanting in the form of a straight line from a side view, this line L3 is placed so as to make the slanting less steep.

FIG. 8 is a frontal view (diagram viewed in the direction of arrow A) along the above releasing direction. As shown in FIG. 8, a side rim portion of an upper part of the front center cover 32 (upper side rim portion 44) is placed so that the lower side is positioned more to the inner left-right side. In addition, the upper side rim portion 44 is placed somewhat slanted with respect to the center plane CS of the vehicle body. On the other hand, a side rim portion of a lower section of the front center cover 32 (lower side rim portion 45) extends in a diagonal lower left-right inner side from the lower end of the upper side rim portion 44 so as to steepen the above slanting. Further, this lower side rim portion 45 extends while curving mildly so that the inner left-right side points further downwards. The lower side of the lower side rim portion 45 is placed approximately parallel to the center plane CS of the vehicle body.

In addition, the front center cover 32 curves mildly so that the outer left-right sides within the upper and lower side rim parts are positioned further rearwards.

Next, an explanation is provided with reference to FIG. 7. On the upper and lower side rims of the front center cover 32, a short fringe 46 is placed approximately parallel to the above releasing direction. This short fringe 46 faces the inner side (mostly rearward) of the cover. The short fringe 46 rises to approximately the same height at the upper side rim portion 44 and the lower side of the lower side rim portion 45. However, the short fringe 46 rises to a higher height at the upper side of the lower side rim portion 45. The short fringe 46 at the upper side of the lower side rim portion 45 is cut out in the form of a convexed circular arc in a diagonal upper front direction from a side view. Hereinafter, this portion is referred to as a side fringe cutout part 47. A cover support stay 48 is integrally formed in a lower side of this side fringe cutout part 47. This cover support stay 48 is used to fasten the front side cover 33.

The cover support stay 48 includes an extending portion 48a and a fastening piece 48b. The extending portion 48a rises rearward from an inner peripheral edge of the side fringe cutout part 47, forming a plane approximately parallel to the center plane CS of the vehicle body. The fastening piece 48b rises in the left and right outer sides from a tip of this extending portion 48a, forming a plane approximately parallel to the left-right direction. The fastening piece 48b is slanted so that an upper portion of the fastening piece 48b is positioned rearward from a side view. This fastening piece 48b overlaps with a cover fastening part 74 (described later) from a front side (outer side of the cover), the cover fastening part 74 being formed at an left and right upper sides of the front side cover 33. The fastening piece 48b and the cover fastening part 74 are fastened and fixed by a single tapping screw B7 (refer to FIG. 12B) inserted from a front side. This tapping screw B7 fastens in a direction approximately parallel to a left-right center plane CS of the vehicle body. The extending portion 48a is formed approximately parallel to this fastening direction. A fastening part 49 of the front center cover 32 and the front side cover 33 includes these cover support stay 48 and the cover fastening part 74.

At an inner side (reverse side, back side) of an upper and lower interim part of the front center cover 32, a pair of left and right upper clips 51 are placed protruding toward a diagonal lower back side. This upper clip 51 is used to fasten the front center cover 32 with the left and right front side covers 33. At an inner side of a lower part of the front center cover 32, a pair of left and right lower clips 52 are placed protruding toward a diagonal lower back side. This lower clip 52 is used to fasten the front center cover 32 with the left and right front side covers 33. The direction in which the upper clip 51 and the lower clip 52 protrude is approximately parallel to the releasing direction of the front center cover 32. In addition, at an inner side of an upper rim part of the front center cover 32, a pair of left and right inner fastening parts 53 are integrally formed. This inner fastening part 53 is used to fasten the front center cover 32 with the inner cover 34.

Next, an explanation is provided with reference to FIGS. 2, 5, and 6. The front side cover 33 is an integrated press molded steel sheet article. The front side cover 33 includes an upper side cover part 33a and a lower side cover part 33b. The upper side cover part 33a covers a peripheral of the head pipe 12 from a diagonal front left-right outer side at a position distanced in a diagonal front left-right outer direction from this head pipe 12. The lower side cover part 33b covers a peripheral of a down frame part 13a from a diagonal front left-right outer side at a position distanced in a diagonal front left-right outer direction from this down frame part 13a. FIGS. 5 and 6 show the front side cover 33 in the left side of the vehicle body. The front side cover in the right side of the vehicle body is bilaterally symmetrical to the above front side cover 33.

Here, a centerline L4 in FIGS. 5 and 6 is a middle ridgeline connecting to the front end ridgeline L1 of the front center cover 32. This line L4 is placed in an upper rear direction from a side view. In addition, for the sake of explanation, a line L5 placed below and approximately parallel to the line L4 and distanced by a predetermined amount from the line L4 is referred to as a lower end ridge of the upper side cover part 33a.

The upper side cover part 33a is placed so as to connect to a side of the front center cover 32. Furthermore, the upper side cover part 33a is curved so that the left and right outer sides are directed further rearwards. From a side view, the upper side cover part 33a is placed so as to be approximately parallel to the front center cover 32 (head pipe 12). Thus, the upper side cover part 33a is slanted so that an upper part of the upper side cover part 33a is positioned rearwards. On the other hand, the lower side cover part 33b is placed so as to connect to a lower part of the upper side cover part 33a. Thus, the lower side cover part 33b is curved to that the outer left and right sides are directed further rearwards. From a side view, the lower side cover part 33b is placed so as to be approximately parallel to the down frame part 13a. Thus, the lower side cover part 33b is slanted so that an upper part of the lower side cover part 33b is placed in a front side. Because of these upper side cover part 33a and the lower side cover part 33b, the entire front side cover 33 is formed in a V-letter shape from a side view.

At a fringe portion (inner side fringe portions 54 and 64) of the left and right inner sides (front side) of the upper side cover part 33a and the lower side cover part 33b, inner edge flanges 55 and 65 are integrally formed, each rising toward an inner side (roughly diagonal rear left-right inner side) of the cover. On the other hand, at the rear ridge parts 56 and 66 of the upper side cover part 33a and the lower side cover part 33b, rear edge flanges 57 and 67 are integrally formed, each rising toward the left and right inner sides.

The upper side cover part 33a is formed so that, considering the width in a direction orthogonal to the direction in which the upper side cover part 33a extends from a side view, an upper portion of the upper side cover part 33a is much narrower. In addition, from a frontal view of the upper side cover part 33a, the upper portion of the upper side cover part 33a is formed so that the upper part has a much narrower left-right width. At the same time, a lower portion of the upper side cover part 33a is curved so that the lower part is directed further toward the left and right inner sides. Further, an end portion (an inner side end portion 54a) in the left-right inner side of the upper side cover part 33a is approximately parallel to the center plane CS of the vehicle body. The inner side end portion 54a is a part of the inner side fringe portion 54 of the upper side cover part 33a.

An upper part of the inner side end portion 54a of the inner side fringe portion 54 of the upper side cover part 33a is placed in the form of a convexed circular arc in the diagonal lower left-right outer side in frontal view. Hereinafter, this part is referred to as an inner circular arc part 61. When the front center cover 32 is attached to the inner side fringe portion 54 of the upper side cover part 33a, the end fringe of the short flange 46 of the front center cover 32 is roughly placed along the upper side cover part 33a. A gap 62 is formed at the inner circular arc part 61. The gap 62 is shaped like a leaf between the short fringe 46 and the side fringe cutout part 47 from both arrow views of a side view and a frontal view.

The lower side cover part 33b is formed so that, from its side view, a width in a direction in which an upper portion crosses vertically with a direction in which the lower side cover part 33b extends is much narrower in the lower side. At the same time, a width of a lower portion of the lower side cover part 33b in the above direction of the vertical crossing is approximately constant. In addition, from a frontal view of the lower side cover part 33b, the upper portion of the lower side cover part 33b is placed in the left and right diagonal upper outer sides of the inner side fringe portion 64. Further, the upper portion of the lower side cover part 33b forms a convexed circular arc. At the same time, the lower portion of the lower side cover part 33b forms a convexed moderate curve in the left and right sides. Moreover, the left-right width of the lower portion of the lower side cover part 33b is approximately constant.

Here, a cover fixing flange 71 is integrally formed at a portion above the inner side end portion 54a of the upper side cover part 33a. This cover fixing flange 71 extends from a tip of the inner edge flange 55 further to the left and right inner sides. The cover fixing flange 71 has, on its upper portion, an upper clip engaging part 72 corresponding to the upper clip 51 of the front center cover 32. At the same time, at a lower portion of the cover fixing flange 71, a pair of upper and lower frame fastening parts 73 are placed corresponding to each cover fastening part 43 of the battery tray 41. Further, at a lower portion of the cover fixing flange 71, a single cover fastening part 74 is placed corresponding to the cover support stay 48 of the front center cover 32.

Each frame fastening part 73 respectively includes a bolt insertion hole. Further, each of the frame fastening part 73 is placed so that the frame fastening part in the upper side is positioned to the left and right outer sides of the frame fastening part in the lower side. In addition, the cover fastening part 74 includes a tapping hole. The cover fastening part 74 is placed in the left and right sides of a middle position of the upper and lower frame fastening parts 73 (a side in close proximity to the inner circular arc part 61). Each of the frame fastening part 73 and the cover fastening part 74 is placed in an inner circumferential side (the left and right inner sides) of the inner circular arc part 61. A lower clip engaging part 75 is integrally formed on the inner side end portion 54a. This lower clip engaging part 75 is in the form of a flange, and rises from a tip of the inner edge flange 55 toward the left and right inner sides.

A square-shaped clip hole is formed on each of the upper clip engaging part 72 and the lower clip engaging part 75. An upper clip 51 and a lower clip 52 of the front center cover 32 are detachably attached to the upper clip engaging part 72 and the lower clip engaging part 75 via a main body of a clip (refer to FIG. 11). At this time, the main body of the clip (not diagramed) engages with the clip hole.

An increased width section 76 is placed in a lower side of the lower side cover portion 33b. This increased width section 76 is formed by extending the inner edge flange 65 further to the inner side of the cover. At the left and right inner sides of this increased width section 76, a fastening part 77 is placed standing toward the left and right inner sides. This fastening part 77 is used to fasten the increased width section 76 to an under cover (not diagramed). At a lower rear side of the lower side cover portion 33b, a fastening part 78 is placed standing rearwards. This fastening part 78 is used to fasten the lower side cover portion 33b to the floor side cover 35.

Next, an explanation is provided with reference to FIGS. 2 and 4. The inner cover 34 is an integrated resin molded article. This inner cover 34 is formed so that its upper edge part is placed along an upper edge part of the front center cover 32, its left and right outer edge parts are placed along the rear ridge parts 56 and 66 of the left and right front side covers 33, and its lower edge part is placed along a front edge part of the floor step 6.

A center tunnel part 81 is formed in the left and right central portions of the inner cover 34. This center tunnel part 81 covers the head pipe 12 and the down frame part 13a from a rear side. A bolt insertion part 82 is placed in an upper part of the center tunnel part 81. An upper side of the left and right center portions of the inner cover 34 is fastened and fixed to a rear part of the head pipe 12 by screwing and tightening a bolt B5, the bold B5 being inserted to the bolt insertion part 82 from a rear side, to a rear supporting bracket 12c, the rear supporting bracket 12c protruding at a rear side of a middle part of the head pipe 12.

At a lower edge part of the inner cover 34, a lower fringe flange 83 is placed extending rearwards. A pair of bolt insertion parts 84 are placed in both the left and right sides of this lower fringe flange 83. A floor side frame (not diagramed) is placed on both the left and right sides of the lower frame part 13b. A lower edge part of the inner cover 34 is fastened and fixed to a front side of a lower part of the vehicle body frame 11 by screwing and tightening a bolt (not diagramed), the bolt being inserted to each of the bolt insertion part 84 from above, to a front end part of the floor side frame. Incidentally, at a lower side of a rear part of each bolt insertion part 84, a protrusion 85 is placed protruding downwards. This protrusion 85 engages with a front end part of the floor side frame, and positions a lower edge part of the inner cover 34. In addition, after the inner cover 34 is attached to the vehicle body, the lower ridge flange 83 is covered by a front edge part of the floor step 6 from above.

The inner cover 34 includes a plurality of screw insertion parts 86 lining up and down the left and right outer ridge parts of the inner cover 34. The left and right outer ridge parts of the inner cover 34 are fastened and fixed to the rear ridge parts 56 and 66 of the left and right front side covers 33 by screwing and tightening a tapping screw (not diagramed), the tapping screw being inserted to each of the screw insertion part 86 from a rear side, to a tapping hole of an inner fastening part 87 (refer to FIG. 6) formed on parts corresponding to the rear edge flanges 57 and 67. At this time, the rear edge flanges 57 and 67 of the left and right front side covers 33 are in contact with the left and right outer ridge portions of the inner cover 34 from the front side.

A pair of left and right screw insertion parts 88 are integrally formed at an upper edge part of the inner cover 34. A tapping hole of each of the inner fastening part 53 (refer to FIGS. 7 and 8) is formed on a corresponding part of an upper ridge part of the front center cover 32. The upper ridge part of the inner cover 34 and the upper ridge part of the front center cover 32 are fastened and fixed to each other by screwing and tightening the tapping screw (not diagramed) to the tapping hole, the tapping screw being inserted to each screw insertion part 88 from a rear side. At this time, the upper ridge part of the inner cover 34 is in contact with the upper ridge part of the front center cover 32 from the front side.

Here, an explanation is provided with reference to FIGS. 5 through 8. By engaging the upper clip 51 and the lower clip 52 respectively to the upper clip engaging part 72 and the lower clip engaging part 75, and by fastening the cover support stay 48 to the cover fastening part 74 with a tapping screw B7, the front center cover 32 is detachably attached to the left and right front side covers 33 attached to the vehicle body in advance.

As shown in FIG. 12B, the gap 62 is formed between the side fringe cutout part 47 of the front center cover 32 and the inner circular arc part 61 of the front side cover 33. A rubber cover 91 closing this gap 62 is provided on this gap 62. At this time, the front center cover 32 is attached to the left and right front side covers 33.

Next, an explanation is provided with reference to FIGS. 9 and 10. The rubber cover 91 is a rubber molded article. This rubber 91 mainly includes an inner side wall 92 generally aligned with the gap 62 in a side view form; a rear wall 93 generally aligned with the gap 62 in a frontal view form; and a fixed flange 94 extending toward the left and right inner sides of the inner side wall 92. FIGS. 9 and 10 show the rubber cover 91 in the left side of the vehicle body. The rubber cover in the right side of the vehicle body is bilaterally symmetrical to the above rubber cover 91 in the left side.

The outer side surface of the inner side wall 92 and a front surface of the rear wall 93 are exposed to an exterior side of the cover. A pair of upper and lower fins 95 are integrally formed in an approximately horizontal manner across this exposed surface. Concerning the upper and lower sides of each fin 95 and in between each fin 95, an opening 96 is formed in a portion at a rear wall 93 side of the inner side wall 92. This opening 96 opens a part of the gap 62 to an external side of the cover (communicates the inner side of the cover with the external side of the cover).

A pair of screw insertion parts 97 are placed above and below the fixed flange 94. The upper and lower tapping screws 98 (refer to FIGS. 7, 8, 11) protrude rearwards at a back side of the left and right inner sides of the side fringe cutout part 47 of the front center cover 32. The fixing flange 94 of the rubber cover 91 is fastened and fixed to the left and right inner sides of the side fringe cutout part 47 of the front center cover 32 by screwing and tightening the tapping screw (tapping screw) B8 to each of the tapping screw (tapping boss), the tapping screw B8 being inserted to each of the screw insertion parts 97 from the rear side (inner side of the cover). At this time, the upper and lower screw insertion parts 97 are in contact with the upper and lower tapping screws 98 from the rear side (inner side of the cover). The upper and lower tapping screws 98 protrude in a direction approximately parallel to the releasing direction of the front center cover 32.

Next, an explanation is provided with reference to FIGS. 9, 10, and 12A as well. When the rubber cover 91 is attached to the front center cover 32, the front ridge of the inner side wall 92 of the rubber cover 91 is in tight contact with the inner peripheral edge of the side fringe cutout part 47. When the front center cover 32 is attached to the left and right front side covers 33, the outer edge of the rear wall 93 of the rubber cover 91 is in close contact with the inner peripheral ridge of the inner circular arc part 61. A condition as described above in which the rubber cover 91 is in close contact with the peripheral of the gap 62, closing and shielding this gap, is called a shielding condition of this rubber cover 91. The visual appearance improves by forming the opening 96 on the rubber cover 91. At the same time, outside air is brought within the front cover 31, making it easier for the battery B to cool down. In addition, the warning sound of the horn 42 can be more easily propagated to an exterior side of the cover.

The cover support stay 48 rises from the side fringe cutout part 47 of the front center cover 32. Thus, an insertion hole 99 in a slit form is provided on a base end portion of the fixed flange 94 of the rubber cover 91, so that the insertion hole 99 is placed in between and across the upper and lower fins 95 (refer to FIG. 10). The extending portion 48a of the cover support stay 48 is inserted through the insertion hole 99.

When the front cover 31 is assembled, the left and right outer edges of the rubber cover 91 are only in tight contact with the front side cover 33. Therefore, as shown in FIG. 12B, by pinching the outer edge of the rubber cover, and by elastically deforming this rubber cover 91 so as to turn the rubber cover 91 to a front side and to the left and right inner sides, the inner side wall 92 and the rear wall 93 can be retreated from a closing position of the gap 62. Furthermore, a large part of this gap 62 can be exposed and opened to an exterior side of the cover. This condition is referred to as a retreating condition of the rubber cover 91.

In this retreating condition, the fastening part 49 (the cover fastening part 74 and the cover supporting stay 48) positioned in the side of the inner circular arc part 61 of the cover fastening flange at an inner peripheral side of the inner circular arc part 61 is exposed to an exterior side of the cover. At the same time, the tapping screw B7 of this fastening part 49 can be attached and detached in the direction of its fastening (the axial direction). By forming the opening 96 on the rubber cover 91, the above elastic deformation can be performed easily.

On the other hand, after the screw is attached or detached, the outer side rim of this rubber cover 91 can come in tight contact with the front side cover 33, and the gap 62 can be closed again, by merely releasing the rubber cover 91 and restoring the elastic deformation.

The extending portion 48a is placed along the fastening direction of the tapping screw B7 of the cover support stay 48. By inserting the extending portion 48a through the insertion hole 99 of the rubber cover 91, a relative movement is made possible in the direction of the fastening between the rubber cover 91 and the insertion hole 99. In addition, as described above, when the rubber cover 91 is turned so as to elastically deform the rubber cover 91, the space for the deformation is augmented.

As described above, according to a fastening structure of a front cover of a vehicle based on the above embodiment, a fastening part 49 between a front side cover 33 and a front center cover 32 making up a front cover 31 of a two-wheeled motor vehicle 1 is structured so that, a part of the front center cover 32 laps over the front side cover 33 from outside, this overlapping portion is regarded as the fastening part 49 between the covers 32 and 33, and the covers 32 and 33 are fastened and fixed to each other by a tapping screw B7 inserted to the fastening part 49 from outside the cover. At the same time, a rubber cover 91 is provided on the front center cover 32, the rubber cover 91 shielding the fastening part 49 from outside the cover when the covers 32 and 33 are fastened and fixed to each other. This rubber cover 91 changes from a shielding condition, in which the fastening part 49 is shielded from outside the cover, to a retreating condition, in which the fastening part 49 is exposed to the exterior of the cover.

According to this configuration, by changing the condition of the rubber cover 91 from the shielding condition to the retreating condition when the tapping screw is attached or detached, the attaching and detaching operations can be performed easily on the fastening part 49. Furthermore, the covers 32 and 33 can be fastened more easily. On the other hand, after the covers 32 and 33 are fastened and fixed with the tapping screw B7, the rubber cover 91 can be returned to the shielding condition, shielding the fastening part 49 from outside the cover. Thus, the visual appearance of the front cover 31 is maintained by preventing the tapping screw B7 from being exposed to the exterior of the cover.

Since the rubber cover 91 is made with an elastic part capable of elastically deforming from the shielding condition to the retreating condition, the tapping screw B7 can be attached and detached by elastically deforming the rubber cover 91 (elastic part) from the shielding condition to the retreating condition. At the same time, after the covers 32 and 33 are fastened and fixed to each other, the fastening part 49 can be shielded from the outside by merely restoring the elastic deformation of the rubber cover 91. In this way, the visual appearance of the front cover 31 can be maintained easily. In addition, it is possible to easily perform the operation of attaching the front cover 31 to the vehicle body, as well as the operation of attaching and detaching the front cover 31 during maintenance procedures after the vehicle is completed.

The rubber cover 91 is attached to the front center cover 32 from the inside. Thus, the rubber cover 91 is attached to the inside of the front center cover 32 positioned outside the cover at the overlapping portion (fastening part 49) of the covers 32 and 33. As a result, the portion at which the rubber cover 91 is attached to the front cover 31 is not exposed outside the cover. In addition, the operation of attaching the rubber cover 91 to the front cover 31 will not become complicated. Furthermore, the fastening part 49 at which the covers 32 and 33 overlap can be easily shielded from the outside with the rubber cover 91.

The fastening part 49 includes a cover support stay 48 extending from the front center cover 32 to the front side cover 33. An insertion hole 99 is provided on the rubber cover 91, the cover support stay 48 being inserted through this insertion hole 99. Thus, the rubber cover 91 can be held by using the cover support stay 48. At the same time, the cover stay 48 can be made smaller compared to the case in which the cover support stay 48 is provided so as to circumvent the rubber cover 91. Therefore, the overall structure of the fastening part 49 can be simplified.

The cover support stay 48 includes an extension part 48a which is approximately parallel to the direction in which the tapping screw B7 is fastened. When the rubber cover 91 is attached to the front center cover 32, the extension part 48a is inserted through an insertion hole 99 of the rubber cover 91. Thus, it is possible to create a space for movement in the rubber cover 91 along the fastening direction of the tapping screw B7. The fastening operation can be performed more easily by increasing the space for the elastic deformation of the rubber cover 91.

The present invention is not limited to the above embodiment. For example, instead of the rubber cover 91, a hinge-type or sliding-type movable shielding part can be provided on the front cover. In addition, a shielding part covering the fastening part 49 can be supported by the front side cover 33, or supported across both covers 32 and 33. Furthermore, the fastening part 49 can be structured by using a normal bolt and nut instead of a tapping screw B7.

The configuration in the above embodiment is an example of the present invention, and may be applied not only to a two-wheeled vehicle, but also to a three-wheeled or a four-wheeled vehicle. Furthermore, various kinds of modifications may be made within the scope of the claims.

### INDUSTRIAL APPLICABILITY

According to the present invention, when the fastening member (fixing member) is attached or detached, the fastening part can be easily attached or detached by changing the shielding part from the shielding condition to the retreating condition. Thus, both covers can be fastened more easily. On the other hand, after both covers are fastened and fixed to each other with the fastening member (fixing member), the fastening part can be shielded from outside the cover by restoring the shielding part to the shielding condition. In this way, the visual appearance of the front cover can be well maintained by preventing the fastening member (fixing member) from being exposed outside the cover.

### DESCRIPTION OF THE REFERENCE SYMBOLS

- 1: two-wheeled motor vehicle (vehicle)
- 31: front cover
- 32: front center cover (second cover)
- 33: front side cover (first cover)
- 48: cover support stay (fastening arm)
- 48a: extending portion
- 49: fastening part
- 91: rubber cover (shielding part)
- 99: insertion hole
- B7: tapping screw (fastening member (fixing member))

## Claims

1. A front cover (31) for a vehicle (1) including a first cover part (33), and a second cover part (32) adjacent to the first cover part (33) and partially overlapping with the first cover part (33), and a fastening structure (49, B7, 91), the fastening structure (49, B7, 91) comprising:
a fastening part (49) being an overlapping portion between the first cover part (33) and the second cover part (32);
a fixing member (B7) being attached from a front side of the fastening part (49), the fixing member (B7) fixing the first cover part (33) and the second cover part (32); and
a shielding member (91) covering the fastening part (49) as well as the fixing member (B7) from the front side, at least a portion of the shielding member (91) being removably attached to one of the cover parts (32, 33), and covering the fixing member (B7),
**characterized in that** the shielding member (91) is attached to a back side of either the first cover part (33) or the second cover part (32) whichever is placed relatively to a front.

2. A front cover (31) according to claim 1, **characterized in that** the shielding member (91) is elastic.

## Patentansprüche

1. Frontabdeckung (31) für ein Fahrzeug (1), die zumindest ein erstes Abdeckteil (33) und ein zweites Abdeckteil (32), das dem erstem Abdeckteil(33)benachbart ist und mit dem ersten Abdeckteil (33) teilweise überlappt, und eine Befestigungsstruktur (49, B7, 91) enthält, wobei die Befestigungsstruktur (49, B7, 91) umfasst:
ein Befestigungsteil (49), das ein Überlappungsabschnitt zwischen dem ersten Abdeckteil (33) und dem zweiten Abdeckteil (32) ist;
ein Befestigungselement (B7), das von einer Vorderseite des Befestigungsteils (49) her angebracht wird, wobei das Befestigungselement (B7) das erste Abdeckteil (33) und das zweite Abdeckteil (32) befestigt;
und
ein Abschirmungselement (91), das das Befestigungsteil (49) sowie das Befestigungselement (B7) von der Vorderseite her abdeckt, wobei zumindest ein Abschnitt des Abschirmungselements (91) an einem der Abdeckteile (32, 33) entfernbar angebracht ist und das Befestigungselement (B7) bedeckt,
**dadurch gekennzeichnet, dass** das Abschirmungselement (91) an einer Rückseite des ersten Abdeckteils (33) oder des zweiten Abdeckteils (32), jenachdem welches relativ vorne angeordnet ist, angebracht ist.

2. Frontabdeckung (31) nach Anspruch 1, **dadurch gekennzeichnet, dass** das Abschirmungselement (91) elastisch ist.

## Revendications

1. Carénage avant (31) pour un véhicule (1) comprenant une première partie de carénage (33), et une seconde partie de carénage (32) adjacente à la première partie de carénage (33) et chevauchant partiellement la première partie de carénage (33), et une structure d'assujettissement (49, B7, 91), la structure d'assujettissement (49, B7, 91) comprenant :
une partie d'assujettissement (49) qui est une portion chevauchante entre la première partie de carénage (33) et la seconde partie de carénage (32) ;
un organe de fixation (B7) qui est attaché sur un côté avant de la partie d'assujettissement (49), l'organe de fixation (B7) fixant la première partie de carénage (33) et la seconde partie de carénage (32) ; et
un organe de protection (91) recouvrant la partie d'assujettissement (49) ainsi que l'organe de fixation (B7) du côté avant, au moins une portion de l'organe de protection (91) étant attaché de façon amovible à l'une des parties de carénage (32, 33), et recouvrant l'organe de fixation (B7),
**caractérisé en ce que** l'organe de protection (91) est attaché sur un côté arrière de la première partie de carénage (33) ou de la seconde partie de carénage (32) selon celle qui est placée par rapport à l'avant.

2. Carénage avant (31) selon la revendication 1, **caractérisé en ce que** l'organe de protection (91) est élastique.
